(19) **Europäisches Patentamt**

**European Patent Office**

**Office européen des brevets**

(11) Veröffentlichungsnummer: **0 294 822 B1**

(12) **EUROPÄISCHE PATENTSCHRIFT**

(45) Veröffentlichungstag der Patentschrift: **11.12.91**

(21) Anmeldenummer: **88109252.2**

(22) Anmeldetag: **10.06.88**

(51) Int. Cl.⁵: **F02M 45/06, F02M 59/26**

(54) **Einspritzpumpe mit Voreinspritzung.**

(30) Priorität: **10.06.87 DE 3719253**
**10.02.88 DE 3804018**

(43) Veröffentlichungstag der Anmeldung:
**14.12.88 Patentblatt 88/50**

(45) Bekanntmachung des Hinweises auf die
Patenterteilung:
**11.12.91 Patentblatt 91/50**

(84) Benannte Vertragsstaaten:
**AT CH DE FR GB IT LI NL SE**

(56) Entgegenhaltungen:
**DE-C- 923 400**
**FR-A- 2 196 438**
**FR-E- 45 106**
**US-A- 2 223 756**
**US-A- 2 565 681**

(73) Patentinhaber: **Klöckner-Humboldt-Deutz Ak-**
**tiengesellschaft**
**Deutz-Mülheimer-Strasse 111 Postfach 80 05**
**09**
**W-5000 Köln 80(DE)**

(72) Erfinder: **Höcker, Manfred**
**Am Sommerberg 5**
**W-5064 Rösrath 3(DE)**

## Beschreibung

Die Erfindung betrifft eine Einspritzpume für Brennkraftmaschinen nach dem Oberbegriff des Anspruchs 1.

Bei modernen Dieselbrennkraftmaschinen, insbesondere solchen mit Direkteinspritz-Verfahren und Abgas-Turboaufladung, erreichen die Verbrennungsgeräusche im Bereich von ca. 30 % der Vollast Höchstwerte.

Das Verhältnis der Kraftstoffmenge bei Vollast und Leerlauf ist bei Auflademotoren besonders groß. Die Auslegung der Einspritzvorrichtung erfolgt primär für den hohen Lastbereich. Daraus folgt auch für den unteren Lastbereich eine relativ hohe Einspritzrate, und damit eine für die in diesem Bereich herrschende große Zündverzugszeit zu große Einspritzmenge. Die Folge ist ein Verbrennungsbeginn mit sehr steilem Verbrennungsdruck-Gradienten und ein entsprechend hohes Verbrennungsgeräusch. Um eine weiche Verbrennung zu erzielen, darf innerhalb der Zündverzugszeit nur eine bestimmte Brennstoffmenge eingebracht werden. Dies kann dadurch erreicht werden, daß im kritischen Lastbereich die Einspritzung der Gesamtkraftstoffmenge in zwei Teilmengen erfolgt, die in einem gewissen zeitlichen Abstand eingespritzt werden. Aus Verbrauchs- und Emissionsgründen ist es erwünscht, die Einspritzung im oberen Lastbereich unverändert zu lassen. Außerdem ist es wichtig, den bei hohen und niedrigen Drehzahlen unterschiedlichen Zündverzugszeiten durch Wahl passender Unterteilung der Einspritzung Rechnung zu tragen.

Aus der US-PS 25 65 681 ist eine gattungsgemäße Einspritzpumpe bekannt, die allgemein eine zweite Entlastungsnut im Pumpenplunger vorschlägt. In Versuchen hat sich jedoch gezeigt, daß die mit einer derartigen Einspritzpumpe betriebenen Motoren insbesondere im unteren Teillastbereich eine hohe Lärmemission zeigen.

Der Erfindung liegt die Aufgabe zugrunde, mit einfachsten Mitteln die Lärmemission von mit Einspritzpumpen betriebenen Brennkraftmaschinen, insbesondere im Leerlauf und unteren Teillastbereich zu senken, ohne nachteilige Folgen für den Vollastbereich.

Die Aufgabe wird nach dem kennzeichnenden Teil des Anspruchs 1 gelöst. Aus hydraulischen Gründen ist für gleichen geometrischen Einspritzhub die Einspritzmenge bei niedrigen Drehzahlen geringer als bei hohen Drehzahlen. Deshalb erfordert eine bestimmte Einspritzmenge bei niedriger Drehzahl einen größeren geometrischen Einspritzhub, d. h. eine stärkere Verdrehung des Pumpenplungers, als bei höherer Drehzahl. Dieser Zusammenhang gilt in gleicher Weise auch für die Voreinspritzmenge. Deshalb muß die Oberkante der zweiten Entlastungsnut im gleichen Sinne wie die Oberkante der ersten Enlastungsnut geneigt sein. Eine optimale Anpassung an die für eine weiche Verbrennung notwendige Gestaltung des Einspritzverlaufes wird erfindungsgemäß dadurch erreicht, daß die Neigung der zweiten Entlastungsnut gegenüber der Pumpenplungeroberkante um einen Winkel, der zwischen dem halben Neigungswinkel der ersten Entlastungsnut und einem um 6° größeren Winkel liegt.

Durch die Ausbildung der Entlastungsnut nach Anspruch 2 wird erfindungsgemäß ein allmählicher Übergang der bei Teillast unterbrochenen Einspritzung zur nicht unterbrochenen Einspritzung bei Vollast erreicht, und damit eine gutes Regelverhalten sichergestellt.

Die Form des Auslaufs der zweiten Entlastungsnut als Schräge bietet den Vorteil der einfachen Fertigung, während die Variante der gekrümmten Kurve eine besonders feinfühlige Abstimmung des Regelverhaltens des Motors ermöglicht.

Die Ausbildung der zweiten Entlastungsnut nach Anspruch 3 bietet den Vorteil, daß aufgrund der konstanten Breite der zweiten Entlastungsnut die Unterbrechungszeit der Einspritzung mit steigender Drehzahl abnimmt und sich in vorteilhafterweise dem mit steigender Motordrehzahl abnehmenden Zündverzug anpaßt. Die an den Plungerdurchmesser gekoppelte Dimensionierung der Breite der zweiten Entlastungsnut berücksichtigt die bei schärferer Einspritzung erforderliche längere Unterbrechung der Einspritzung bei Teillast und Leerlauf.

Die Dimensionierung der Tiefe der zweiten Entlastungsnut sichert den erforderlichen Strömungsquerschnitt für ein rasches Entlasten des Pumpenraumes und die damit verbundene Unterbrechung der Einspritzung.

Bei der Anordnung nach Anspruch 4 wird erfindungsgemäß erreicht, daß sich auch die Unterbrechungszeit der Einspritzung in Abhängigkeit von der Motordrehzahl bzw. der Drehstellung des Pumpenplungers ändert und damit ein weiterer Parameter zur Abstimmung der Einspritzung zur Verfügung steht.

Die Anordnung nach Anspruch 5 gestattet erfindungsgemäß die Fertigung von Entlastungsschlitz und zweiter Entlastungsnut mit ein- und demselben Werkzeug was besonders vorteilhaft ist bei der Nacharbeit vorhandener Serienpumpenplunger und Serienpumpenplungerbüchsen.

Die Verbindung des Entlastungsschlitzes mit der Ansaugöffnung bietet ebenfalls den Vorteil einer einfachen Nacharbeit einer Serienpumpenplungerbüchse, da der abgesteuerte Kraftstoff über den Entlastungsschlitz in die ohnedies vorhandene Ansaugöffnung abfließen kann und somit eine Änderung des Einspritzpumpengehäuses entfällt.

Die Anordnung des Entlastunggsschlitzes senkrecht zur Bewegungsrichtung des Pumpenplungers und seine Lage zum höchsten Punkt der Ansaugöffnung bietet den Vorteil, daß der Förderbeginn der Einspritzpumpe nach der bekannten Überlaufmethode exakt eingestellt werden kann und keine diesbezüglichen Sondermaßnahmen erforderlich sind.

Die gleiche Länge von zweiter Entlastungsnut und Entlastungsschlitz bietet die Möglichkeit, Entlastungsschlitz und zweite Entlastungsnut mit ein- und demselben Werkzeug in vorhandene Serienbauteile einarbeiten zu können.

Durch die Anordnung nach Anspruch 6 wird erfindungsgemäß erreicht, daß bei der Pumpenplungerstellung "Vollast" keine Unterbrechung der Einspritzung stattfindet. Damit werden optimaler Kraftstoffverbrauch und niedrige Schadstoffemission bei Vollast erzielt.

Die Lage der zweiten Entlastungsnut zur Plungeroberkante stellt erfindungsgemäß die erforderliche Voreinspritzmenge in der Drehstellung "niedriger Leerlauf" des Pumpenplungers sicher. Dadurch wird vorteilhafterweise das Leerlaufnageln des Dieselmotors unterbunden.

Die Ausbildung nach Anspruch 7 gestattet es, das aufwendige elektroerosive Bohren durch das einfache mechanische Bohren zu ersetzen. Außerdem kann die Toleranz der Winkellage der zweiten Entlastungsnut größer gewählt werden.

Die Ausbildung nach Anspruch 8 ergibt eine einfache, fertigungsgünstige Zuordnung der Saugöffnung zur Entlastungsbohrung.

Die Wahl des Durchmessers der Entlastungsbohrung und ihrer Lage zur Ansaugöffnung bewirkt gute Geräusch-, Verbrauchs- und Emissionswerte des Motors.

Durch die Anordnung nach Anspruch 9 wird erfindungsgemäß erreicht, daß bei der Pumpenplungerstellung "Vollast" keine Unterbrechung der Einspritzung stattfindet. Damit werden optimaler Kraftstoffvebrauch und niedrige Schadstoffemission bei Vollast erzielt. Die geringfügige Überdeckung der Steuerquerschnitte verhindert einen Fördermengensprung beim Übergang von Teillast auf Vollast.

Die Ausbildung nach Anspruch 10 stellt erfindungsgemäß die erforderliche Voreinspritzmenge in der Drehstellung "niedriger Leerlauf" des Pumpenplungers sicher. Dadurch wird vorteilhafterweise das Leerlaufnageln des Dieselmotors unterbunden.

Weitere Merkmale der Erfindung ergeben sich aus der folgenden Beschreibung und der Zeichnung, in der Ausführungsbeispiele der Erfindung schematisch dargestellt sind.

Es zeigen:

Fig. 1: einen teilweisen Längsschnitt durch einen erfindungsgemäßen Pumpenplungerbüchse, bei dem die beiden Entlastungsnuten über eine axiale Nut mit dem Pumpenraum in Verbindung stehen.

Fig. 2: einen teilweisen Längsschnitt durch eine Pumpenplungerbüchse, bei der die Entlastungsnuten im Pumpenkolben über eine zentrale Bohrung mit dem Pumpenraum verbunden sind.

Fig. 3: eine Abwicklung eines Pumpenplungers mit Entlastungsnuten und Axialnut.

Fig. 4: eine Abwicklung der Pumpenplungerbüchse mit Ansaugöffnung und Entlastungsschlitz.

Fig. 4a: einen Teilschnitt durch die Pumpenplungerbüchse an der Stelle von Saugöffnung und Entlastungsschlitz.

Fig. 5 eine Zuordnung von Pumpenplunger und Pumpenplungerbüchse in der Verdrehstellung des Pumpenplungers für niedrigen Leerlauf.

Fig. 5a: dieselbe Darstellung wie in Fig. 5, jedoch in der Verdrehstellung des Pumpenplungers für volle Leistung.

Figur 6 Einen teilweisen Längsschnitt durch eine erfindungsgemäße Pumpenplungerbüchse, bei der die beiden Entlastungsnuten des Pumpenplungers über eine axiale Nut mit dem Pumpenraum in Verbindung stehen.

Figur 7 Einen teilweisen Längsschnitt durch eine Pumpenplungerbüchse, bei der die Entlastungsnuten im Pumpenplunger über eine zentrale Bohrung mit dem Pumpenraum verbunden sind.

Figur 8 Eine Abwicklung einer Pumpenplungerbüchse mit Saugöffnung und der erfindungsgemäßen Entlastungsbohrung.

Figur 8a Einen Teilschnitt durch die Pumpenplungerbüchse mit Saugöffnung und Entlastungsbohrung.

Figur 9 Eine Zuordnung von Pumpenplunger und Pumpenplungerbüchse in der Verdrehstellung des Pumpenplungers für niedrigen Leerlauf.

Figur 9a Dieselbe Darstellung wie in Figur 4, jedoch in der Verdrehstellung des Pumpenplungers für volle Leistung.

Beschreibung des Ausführungsbeispiels:

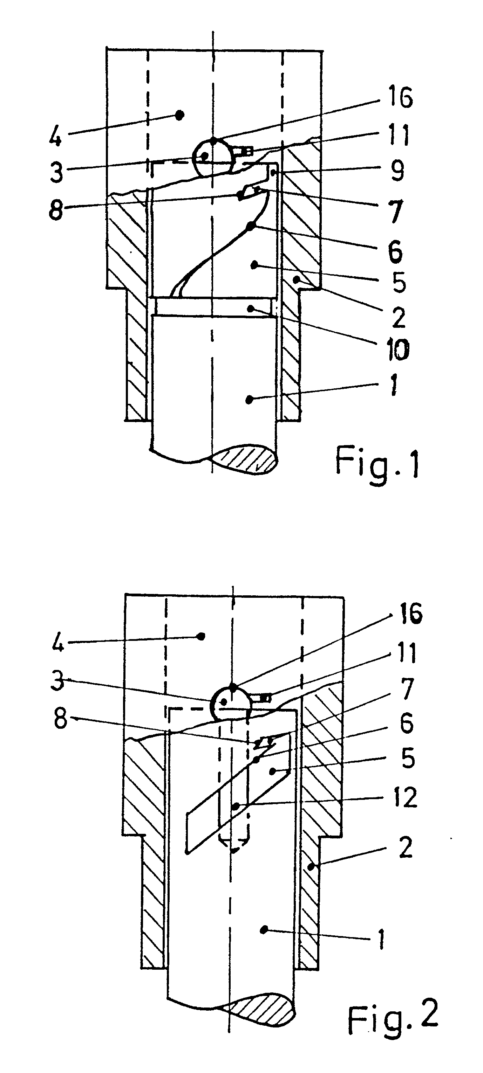

In Fig. 1 ist ein Pumpenplunger 1 in einer Pumpenplungerbüchse 2 axial verschiebbar geführt. Der Pumpenplunger 1 wird von einem nicht dargestellten Nocken aus angetrieben, saugt Kraftstoff aus einer Ansaugöffnung 3 und fördert Kraftstoff aus einem Pumpenraum 4 über ein nicht dargestelltes Entlastungsventil zu einem ebenfalls nicht dargestellten Einspritzventil. Am druckraumseitigen Ende des Pumpenplungers 1 sind eine erste Enlastungsnut 5 mit einer Absteuerkante 6, eine zweite Entlastungsnut 7 und eine Axialnut 9 angeordnet. Die Axialnut 9 verbindet den Pumpenraum 4 mit einer Ringnut 10 und den Entlastungsnuten 5 und 7.

In der Pumpenplungerbüchse 2 ist ein rechtekkiger Entlastungsschlitz 11 senkrecht zur Bewegungsrichtung des Pumpenplungers 1 angeordnet, der mit der Ansaugöffnung 3 in Verbindung steht.

In Fig. 2 ist eine Variante dargestellt, bei der die Verbindung zwischen dem Pumpenraum 4 und der ersten Entlastungsnut 5 bzw. der zweiten Entlastungsnut 7 über eine zentrale Bohrung 12 erfolgt.

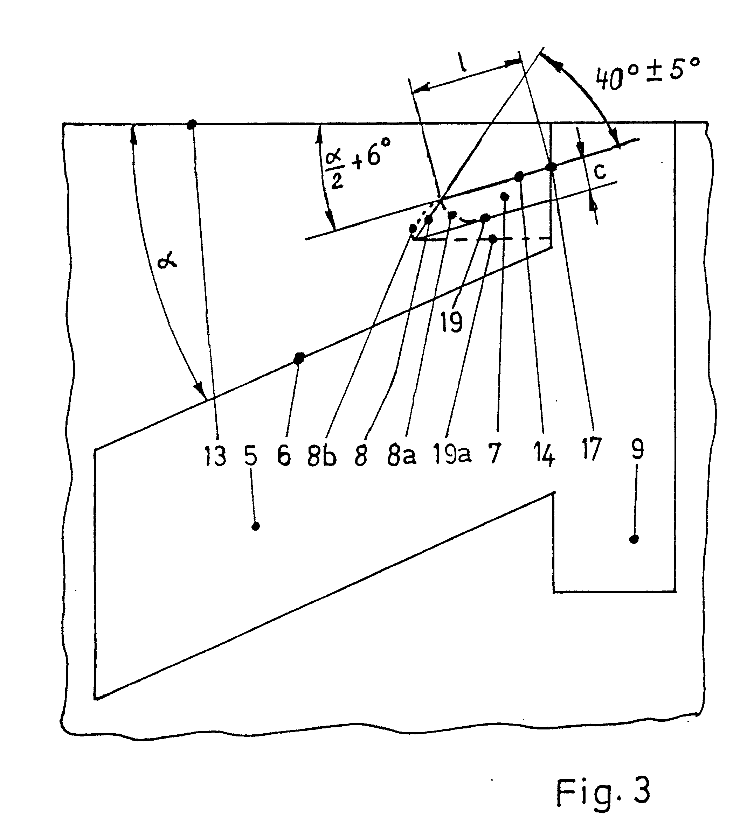

Aus Fig. 3 gehen die genauen Abmessungen der zweiten Entlastungsnut 7 hervor. Diese hat gegenüber der Plungeroberkante 13 eine Neigung, die zwischen dem halben Neigungswinkel ($\frac{\alpha 5}{2}$) der Absteuerkante 6 gegenüber der Plungeroberkante 13 und einem um 6° größeren Winkel liegt. Die Breite der zweiten Entlastungsnut 7 beträgt "c" mm, wobei "c" eine Größe zwischen 5 und 7% des Durchmessers von Pumpenplunger 1 angibt.

Die zweite Entlastungsnut 7 besitzt einen Auslauf 8, der sich als Schräge unter einem Winkel von 40° ± 5° von der Ober- zur Unterkante der zweiten Entlastungsnut 7 erstreckt.

Varianten des schrägen Auslaufs 8 sind die Auslaufsformen 8a und 8b, die die Gestalt einer in Annäherung gekrümmten Kurve besitzen.

Die Variante 19a der unteren Steuerkante 19 der zweiten Entlastungsnut läuft parallel oder annähernd parallel zur Pumpenplungeroberkante 13.

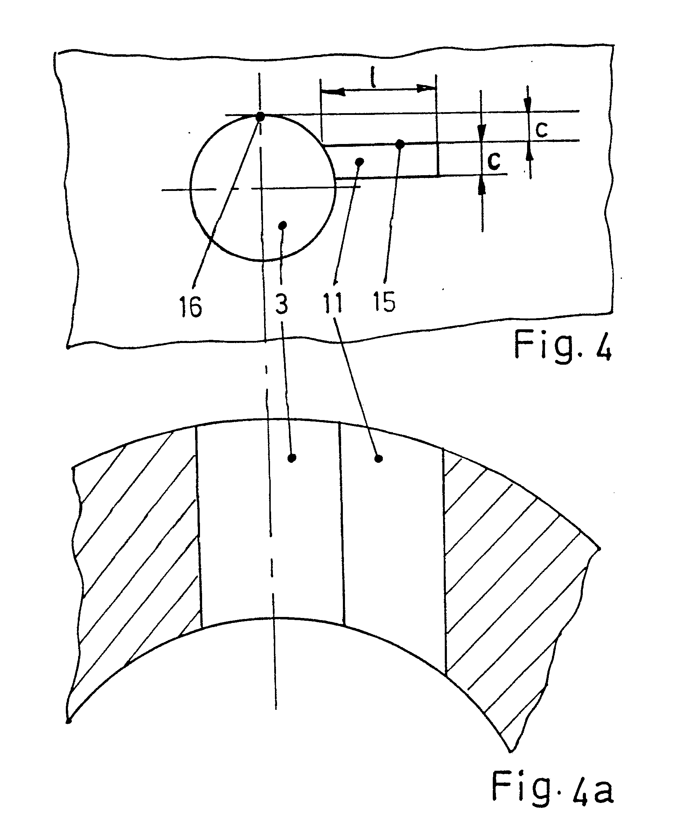

Die Länge "l" der oberen Steuerkante 14 der zweiten Entlastungsnut 7 ist gleich der Länge der oberen Steuerkante 15 des Entlastungsschlitzes 11. In Fig. 4 und Fig. 4a sind die Ansaugöffnung 3 und der mit dieser verbundene Entlastungsschlitz 11 dargestellt. Der Entlastungsschlitz 11 hat die Breite "c" mm, die der Breite der zweiten Entlastungsnut 7 entspricht.

Um das gleiche Maß "c" liegt der Entlastungsschlitz 11 unter dem Scheitelpunkt 16 der Ansaugöffnung 3.

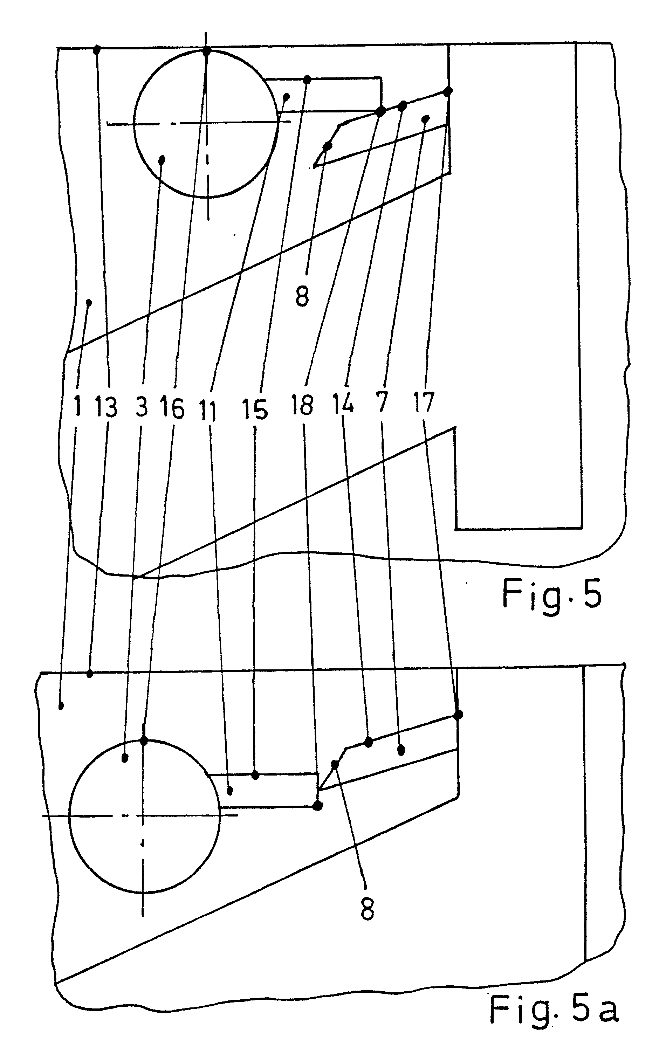

Die Größe der Länge "l" und der Abstand des Punktes 17 der zweiten Entlastungsnut 7 von der Plungeroberkante 13 ist durch die in Fig. 5 und 5a gezeigte Zuordnung der Winkel- und Höhenlage des Pumpenplungers 1 mit der zweiten Entlastungsnut 7 und der Ansaugöffnung 3 in der Pumpenplungerbüchse 2 mit dem Entlastungsschlitz 11 gegeben. In Fig. 5 ist die Verdrehlage des Pumpenplunger 1 beim niedrigen Leerlauf des Motors und dessen axiale Lage beim Verschließen der Ansaugöffnung 3 durch den Pumpenplunger 1 dargestellt. Die Länge "l" der oberen Steuerkante 15 des Entlastungsschlitzes 11 und der Abstand zwischen der Pumpenplungeroberkante 13 und dem Punkt 17 der zweiten Entlastungsnut 7 sind so festgelegt, daß der Eckpunkt 18 des Entlastungsschlitzes 11 im niedrigen Leerlauf des Motors gerade dann die obere Steuerkante 14 der zweiten Entlastungsnut 7 berührt, wenn der Scheitelpunkt 16 der Ansaugöffnung 3 von der Pumpenplungeroberkante 13 überlaufen wird.

In Fig. 5a ist die Verdrehlage des Pumpenplungers 1 bei voller Leistung des Motors dargestellt. Die Neigung der Schräge des Auslaufs 8 ist so gewählt, daß sich in Verbindung mit der Länge "1" der oberen Steuerkante 14 der zweiten Entlastungsnut 7 der Entlastungsschlitz 11 und die zweite Entlastungsnut 7 gerade nicht mehr überschneiden.

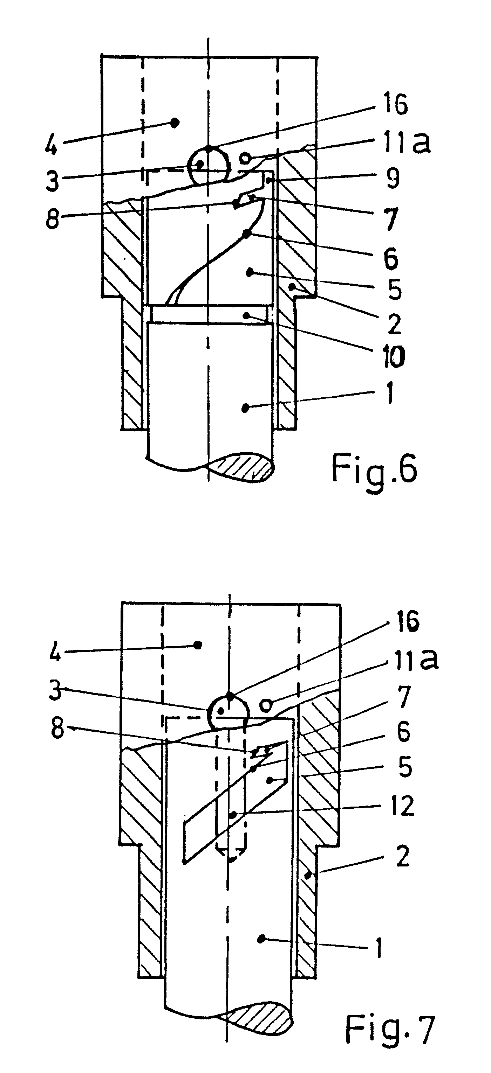

In Figur 6 ist ein Pumpenplunger 1 in einer Pumpenplungerbüchse 2 axial verschiebbar geführt. Der Pumpenplunger 1 wird von einem nicht dargestellten Nocken aus angetrieben, saugt Kraftstoff aus einer Saugöffnung 3 und fördert Kraftstoff aus einem Pumpenraum 4 über ein nicht dargestelltes Entlastungsventil zu einem ebenfalls nicht dargestellten Einspritzventil. Am druckraumseitigen Ende des Pumpenplungers 1 sind eine erste Entlastungsnut 5 mit einer Absteuerkante 6, eine zweite Entlastungsnut 7 und eine Axialnut 9 angeordnet. Die Axialnut 9 verbindet den Pumpenraum 4 mit einer Ringnut 10 und den Entlastungsnuten 5 und 7.

In Figur 7 ist eine Variante dargestellt, bei der die Verbindung zwischen dem Pumpenraum 4 und der ersten Entlastungsnut 5 bzw. der zweiten Entlastungsnut 7 über eine zentrale Bohrung 12 erfolgt.

In der Pumpenplungerbüchse 2 ist eine Entlastungsbohrung 11a angeordnet, die mit der Saugöffnung 3 nicht in Verbindung steht.

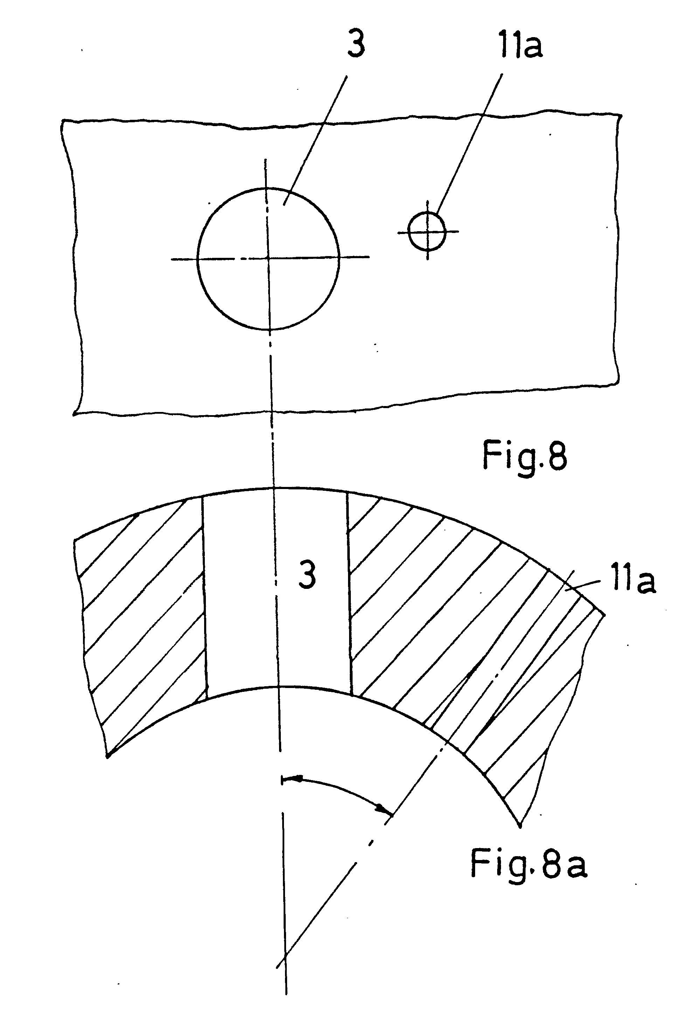

In Figur 8 und Figur 8a sind die Saugöffnung 3 und die mit dieser nicht verbundene Entlastungsbohrung 11a dargestellt. Die Entlastungsbohrung 11a ist gegenüber der Saugöffnung 3 um den Umfangswinkel 40 +/- 2 Grad versetzt. Der Durchmesser der Entlastungsbohrung 11a beträgt 8 bis 12 % des Pumpenplungerdurchmessers. Um das Maß ihres Durchmessers liegt die Oberkante der Entlastungsbohrung 11a unterhalb der Oberkante der Saugöffnung 3.

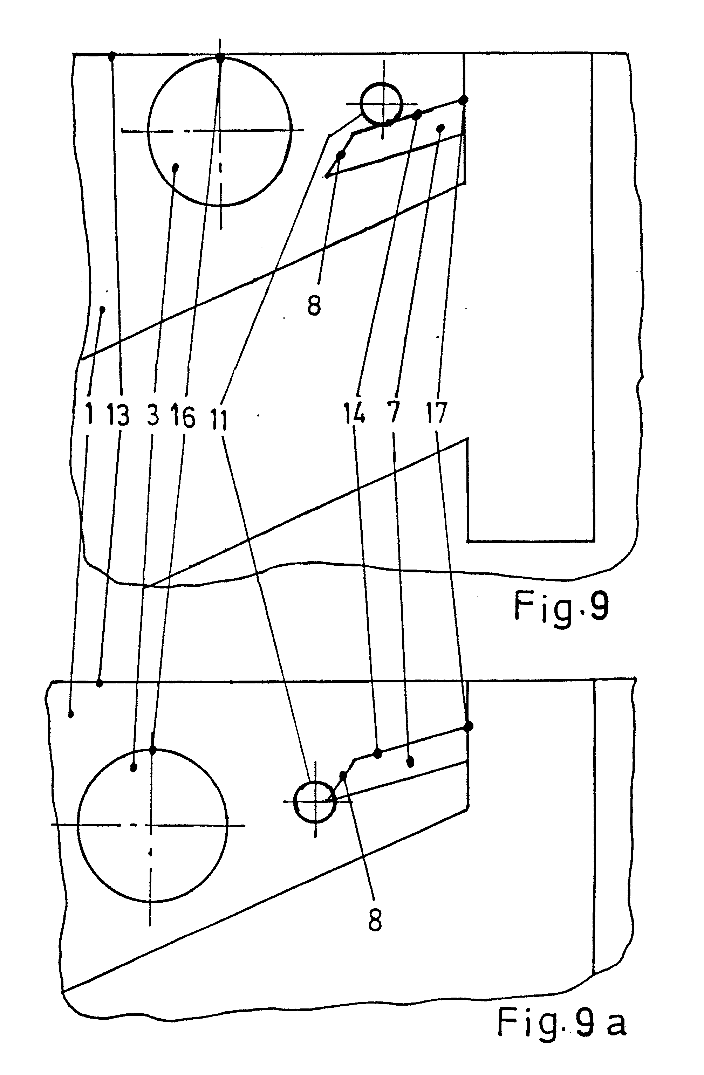

Der Abstand eines Punktes 17 der zweiten Entlastungsnut 7 von der Plungeroberkante 13 ist durch die in Fig. 9 und 9a gezeigte Zuordnung der Winkel- und Höhenlage des Pumpenplungers 1 mit der zweiten Entlastungsnut 7 und der Ansaugöffnung 3 in der Pumpenplungerbüchse 2 mit der Entlastungsbohrung 11a gegeben. In Fig. 9 ist die Verdrehlage des Pumpenplungers 1 bei niedrigem Leerlauf des Motors und dessen axiale Lage bei Verschließen der Ansaugöffnung 3 durch den Pumpenplunger 1 dargestellt. Der Abstand zwischen der Pumpenplungeroberkante 13 und dem Punkt 17 der zweiten Entlastungsnut 7 ist so festgelegt, daß im niedrigen Leerlauf des Motors die obere Steuerkante 14 der zweiten Entlastungsnut 7 die Entlastungsbohrung 11a berührt, wenn der Scheitelpunkt 16 der Ansaugöffnung 3 von der Pumpenplungeroberkante 13 überlaufen wird.

In Fig. 9a ist die Verdrehlage des Pumpenplungers 1 bei voller Leistung des Motors dargestellt. Die Neigung der Schräge des Auslaufs 8 und die Länge der oberen Steuerkante 14 der zweiten Entlastungsnut 7 sind so gewählt, daß sich die zweite Entlastungsnut 7 und die Entlastungsbohrung 11a geringfügig überdecken.

Größe und Anordnung der erfindungsgemäßen Entlastungsbohrung 11a führen zu den gleichen guten Motorergebnissen wie die Lösung mit dem Entlastungsschlitz 11 jedoch ist die Entlastungsbohrung 11a bedeutend einfacher zu fertigen.

Die Einspritzpumpe funktioniert folgendermaßen:
bei der Aufwärtsbewegung des Pumpenplungers 1 in der Pumpenplungerbüchse 2 werden zuerst die Ansaugöffnung 3 und der Entlastungsschlitz 11 bzw. die Entlastungsbohrung 11a geschlossen. Nach Abschluß der Ansaugöffnung 3 beginnt die Kraftstofförderung. Deren Ende tritt ein, wenn die Absteuerkante 6 der ersten Entlastungsnut 5 die Ansaugöffnung 3 überläuft.

Durch Verdrehen des Pumpenplungers 1 ergeben sich in Verbindung mit der schrägen Absteuerkante 6 unterschiedliche Nutzhübe und damit unterschiedliche Einspritzmengen.

In der Verdrehlage des Pumpenplungers, die der Einspritzmenge des niedrigen Leerlaufs des Motors entspricht, beginnt nach Abschluß der Ansaugöffnung 3 die Überdeckung der zweiten Entlastungsnut 7 und des Entlastungsschlitzes 11 bzw. der Entlastungsbohrung IIa. Aufgrund des nur allmählichen Wachsens des Überdeckungsquerschnitts wird noch die kleine Leerlaufmenge gefördert, bis es bei hinreichender Größe des Überdeckungsquerschnittes zur Unterbrechung der Einspritzung kommt. Nachdem die Entlastungsnut 7 den Entlastungsschlitz 11 bzw. die Entlastungsbohrung 11a überlauten hat, beginnt der zweite Abschnitt der Einspritzung. Die Voreinspritzmenge ist so bemessen, daß bei ihrer Verbrennung kein störendes Verbrennungsgeräusch auftritt.

Eine optimale Anpassung an die für eine weiche Verbrennung notwendige Gestaltung des Einspritzverlaufes wird dadurch erreicht, daß die zweite Entlastungsnut 7 unter dem halben Winkel der Neigung der Absteuerkante 6 zur Plungeroberkante 13 ausgeführt wird. Da aus hydraulischen Gründen für gleiche geometrische Voreinspritzhübe sich bei niedrigen Drehzahlen geringere Einspritzmengen als bei hohen Drehzahlen einstellen, wird mit der Neigung der zweiten Entlastungsnut 7 erreicht, daß für die bei kleinen Drehzahlen notwendigen größeren Regelwege bzw. Förderhübe auch ein größerer Voreinspritzhub realisiert wird.

Die Gestaltung des Auslaufs 8 der zweiten Entlastungsnut 7 ist für einen allmählichen Übergang der unterbrochenen in die nicht unterbrochene Einspritzung wichtig. Dadurch werden Sprünge im Verlauf der Einspritzmenge vermieden, die zu unstabilem Regelverhalten führen können.

Der in Fig. 3 dargestellte Auslauf 8 der zweiten Entlastungsnut 7 bietet den Vortei einer einfachen Fertigung. Demgegenüber gestatten die Varianten 8a und 8b eine besonders genaue Abstimmung des Einspritzverlaufs über der Regelstangenstellung und eine genaue Anpassung an das Regelverhalten des jeweiligen Motors.

Die in Fig. 3 dargestellte Variante mit der unteren Steuerkante 19a parallel oder nahezu parallel zur Pumpenplungeroberkante 13 bewirkt, daß in Abhängigkeit von der Drehzahl bzw. der Drehstellung des Pumpenplungers 1 auch eine Anpassung der Unterbrechungszeiten erfolgt.

Ein weiterer Vorteil der erfindungsgemäßen Anordnung besteht darin, daß sie gestattet, aus einem abgestimmten Pumpenplunger für nicht unterbrochene Einspritzung durch Nacharbeit einen Pumpenplunger für. Voreinspritzung herzustellen. Auf diese Weise können Motoren, der Verbrennungsgeräusch beanstandet wird, nachträglich akustisch verbessert werden.

## Patentansprüche

1. Einspritzpumpe für eine Brennkraftmaschine, insbesondere Dieselbrennkraftmaschine, mit einer Pumpenplungerbüchse (2), in der ein von einem Pumpenplunger (1) begrenzter Pumpenraum (4) angeordnet ist, der über eine Saugöffnung (3) mit Kraftstoff beschickt ist und der über eine Entlastungsöffnung (3) in einer oberen Stellung des Pumpenplungers (1) über eine im Pumpenplunger (1) vorgesehene erste Entlastungsnut (5) mit schräger Absteuerkante (6) entlastbar ist und mit einem zwischen der ersten Entlastungsnut (5) und der Pumpenplungeroberkante im Pumpenplunger (1) angeordneten zweiten Entlastungsnut (7), die in bestimmter Dreh- und Axialstellung des Pumpenplungers (1) mit einer weiteren Entlastungsöffnung (11,11a), in der Pumpenplungerbüchse (2) korrespondiert, wobei die obere Kante (14) der zweiten Entlastungsnut (7) gegenüber der ebenen Pumpenplungeroberkante (13) geneigt verläuft,
dadurch gekennzeichnet, daß die Neigung der oberen Kante (14) der zweiten Entlastungsnut (7) zwischen dem halben Neigungswinkel der Absteuerkante (6) der ersten Entlastungsnut (5) und einem um 6° größeren Winkel liegt.

2. Einspritzpumpe nach Anspruch 1,
dadurch gekennzeichnet, daß die zweite Entlastungsnut (7) an ihrem in axialer Richtung am vom Pumpenplunger (1) entferntesten Ende einen Auslauf (8) besitzt, der Auslauf (8) der zweiten Entlastungsnut (7) entweder eine Schräge ist, die sich von der Oberkante (14) zur Unterkante (19) erstreckt und zwar unter einem Winkel von 40 Grad +/-5 Grad zur Oberkante (14) der zweiten Entlastungsnut (7), oder daß der Auslauf (8) der zweiten Entlastungsnut (7) mindestens in Annäherung eine gekrümmte Kurve ist, die sich von der Ober -zur Unterkante der zweiten Entlastungsnut (7) erstreckt.

3. Einspritzpumpe nach Anspruch 1 oder 2,
dadurch gekennzeichnet, daß die Ober- und Unterkante der zweiten Entlastungsnut (7) parallel sind und einen Abstand von 5 bis 7 % des Pumpenplungerdurchmessers haben und daß Tiefe und Breite der zweiten Entlastungsnut (7) gleich sind.

4. Einspritzpumpe nach einem der Ansprüche 1 bis 3,
dadurch gekennzeichnet, daß die Unterkante (19) der zweiten Entlastungsnut (7) parallel oder nahezu parallel zur Plungeroberkante (13) verläuft.

5. Einspritzpumpe nach einem der Ansprüche 1 bis 4,
dadurch gekennzeichnet, daß die weitere Entlastungsöffnung ein Entlastungsschlitz (11) ist, der rechteckig ist, die gleiche Breite wie die zweite Entlastungsnut (7) besitzt, mit der Ansaugöffnung (3) verbunden ist, senkrecht zur Bewegungsrichtung des Pumpenplungers (1) angeordnet ist und sich um die Breite der zweiten Entlastungsnut (7) unterhalb des höchsten Punktes (16) der Ansaugöffnung (3) befindet und daß die Länge der Oberkanten von zweiter Entlastungsnut (7) und Entlastungsschlitz (11) gleich sind.

6. Einspritzpumpe nach Anspruch 5,
dadurch gekennzeichnet, daß die Länge der Oberkanten von Entlastungsnut (7) und Entlastungsschlitz (11) so groß ist, daß in der Drehstellung des Pumpenplungers (1), die der "Vollast" entspricht, Entlastungsnut (7) und Entlastungsschlitz (11) sich nicht berühren und daß in einer Drehstellung des Pumpenplungers (1), die "niedrigem Leerlauf" entspricht, der Abstand von der Pumpenplungeroberkante (13) zur Oberkante (14) der zweiten Entlastungsnut (7) so groß ist, daß die zweite Entlastungnut (7) den Entlastungsschlitz (11) gerade dann trifft, wenn die Oberkante (13) des Pumpenplungers (1) die Ansaugöffnung (3) schließt.

7. Einspritzpumpe nach einem der Ansprüche 1 bis 4,
dadurch gekennzeichnet, daß die weitere Entlastungsöffnung als von der Entlastungsöffnung (3) getrennte Entlastungsbohrung (11a) ausgebildet ist.

8. Einspritzpumpe nach Anspruch 7,
dadurch gekennzeichnet, daß die Entlastungsbohrung (11a) gegenüber der Ansaugöffnung (3) um den Umfangswinkel 40 Grad +/- 2 Grad versetzt angeordnet ist, der Durchmesser der Entlastungsbohrung (11a) 8 bis 12 % vom Durchmesser des Pumpenplungers (1) beträgt und daß die Oberkante der Entlastungsbohrung (11a) um das Maß des Durchmessers der Entlastungsbohrung (11a) unterhalb der Oberkante der Ansaugöffnung (3) liegt.

9. Einspritzpumpe nach einem der Ansprüche 7 oder 8,
dadurch gekennzeichnet, daß die Länge der Oberkante (14) der Entlastungsnut (7) so groß ist, daß in der Drehstellung des Pumpenplungers (1), die der "Vollast" entspricht, die Spitze des Auslaufs (8) der Entlastungsnut (7) und die Entlastungsbohrung (11a) sich geringfügig überdecken.

10. Einspritzpumpe nach einem der Ansprüche 7 bis 9,
dadurch gekennzeichnet, daß in einer Drehstellung des Pumpenplungers (1), die "niedrigem Leerlauf" entspricht, der Abstand von der Pumpenplungeroberkante (13) zur Oberkante (14) der zweiten Entlastungsnut (7) so groß ist, daß die zweite Entlastungsnut (7) die Entlastungsbohrung (11a) gerade dann tangiert, wenn die Pumpenplungeroberkante (13) die Ansaugöffnung (3) schließt.

**Claims**

1. An injection pump for an internal combustion engine, more particularly a diesel engine, comprising a pump plunger sleeve (2) containing a pump chamber (4) bounded by a pump plunger (1) and supplied with fuel through a suction opening (3) and adapted to be discharged via a discharge opening (3), when the pump plunger (1) is in a top position, via a first discharge slot (5) provided in the pump plunger (1) and having an oblique shut-off edge (6), the pump having a second discharge slot (7) disposed in the pump plunger (1) between the first discharge slot (5) and the top edge of the pump plunger and corresponding to another discharge opening (11, 11) in the pump plunger sleeve (2) when the pump plunger (1) is in a given rotary and axial position, the top edge (14) of the second discharge slot (7) extending at an angle to the level top edge (13) of the pump plunger, characterised in that the inclination of the top edge (14) of the second discharge slot (7) is between half the angle of inclination of the shut-off edge (6) of the first discharge slot (5) and an angle 6$^\circ$ greater.

2. An injection pump according to claim 1, characterised in that the second discharge slot (7), at its, end furthest in the axial direction from the pump plunger (1), has an outlet (8), and the outlet (8) of the second discharge slot (7) is either a slope extending from the top edge (14) to the bottom edge (19) at an angle of 40$^\circ$ ± 5$^\circ$ to the top edge (14) of the second discharge slot (7), or the outlet (8) of the second discharge slot (7) is at least approximately a curve extending from the top edge to the bottom edge of the second discharge slot (7).

3. An injection pump according to claim 1 or 2, characterised in that the top edge and the bottom edge of the second discharge slot (7) are parallel and are apart by 5 to 7% of the pump plunger diameter, and the depth and width of the second discharge slot (7) are equal.

4. An injection pump according to any of claims 1 to 3, characterised in that the bottom edge (19) of the second discharge slot (7) extends parallel or approximately parallel to the top surface (13) of the plunger.

5. An injection pump according to any of claims 1 to 4, characterised in that the additional discharge opening is a discharge port (11) which is rectangular, has the same width as the second discharge slot (7), is connected to the suction opening (3), is disposed at right angles to the direction of motion of the pump plunger (1), and is the width of the second discharge slot (7) below the highest point (16) of the suction opening (3), and the lengths of the top edges of the second discharge slot (7) and the discharge port (11) are equal.

6. An injection pump according to claim 5, characterised in that the lengths of the top edges of the discharge slot (7) and the discharge port (11) are such that when the pump plunger (1) is in the rotary position corresponding to "full load," the discharge slot (7) and the discharge port (11) do not touch, whereas when the pump plunger (1) is in the rotary position corresponding to "low idling," the distance from the top edge (13) of the pump plunger to the top edge (14) of the second discharge slot (7) is such that the second discharge slot (7) just touches the discharge port (11) when the top surface (13) of the pump plunger (1) closes the suction opening (3).

7. An injection pump according to any of claims 1 to 4, characterised in that the additional discharge opening is a discharge bore (11a) separate from the discharge opening (3).

8. An injection pump according to claim 7, characterised in that the discharge bore (11a) is offset relative to the suction opening (3) by a circumferential angle of 40$^\circ$ ± 2$^\circ$, the diameter of the discharge bore (11a) is 8 to 12% of the diameter of the pump plunger (1), and the top edge of the discharge bore (11a) is below the top edge of the suction opening (3) by an amount equal to the diameter of the discharge bore (11a).

9. An injection pump according to claim 7 or 8, characterised in that the length of the top edge (14) of the discharge slot (7) is such that when the pump plunger (1) is in the rotary position corresponding to "full load," the tip of the outlet (8) of the discharge slot (7) slightly overlaps the discharge bore (11a).

10. An injection pump according to any of claims 7 to 9, characterised in that when the pump plunger (1) is in a rotary position corresponding to "low idling," the distance from the top edge (13) of the pump plunger to the top edge (14) of the second discharge slot (7) is such that the second discharge slot (7) just touches the discharge bore (11a) when the top edge (13) of the pump plunger closes the suction opening ( 3).

## Revendications

1. Pompe à injection pour moteur à combustion interne, notamment un moteur diesel comprenant une chambre de pompe (4) délimitée par un piston de pompe (1), chambre qu'on alimente par un orifice d'aspiration (3) en carburant et qu'on peut décharger par un orifice de décharge en position supérieure du piston de pompe (1) par une première rainure de décharge (5) ménagée dans le piston de pompe (1) avec un bord de guidage (6) chanfreiné et comprenant une deuxième rainure de décharge (7) placée entre la première rainure de décharge (5) et le bord supérieur du piston de pompe dans le piston de pompe (1) rainure qui correspond pour une position axiale et angulaire déterminée du piston de pompe (1) avec un autre orifice de décharge (11, 11a) de la chemise de piston de pompe (2), le bord supérieur (14) de la deuxième rainure de décharge (7) étant inclinée par rapport au bord plan supérieur de piston de pompe (13), caractérisé en ce que la pente du bord supérieur (14) de la deuxième rainure de décharge (7) est comprise entre la moitié de l'angle d'inclinaison du bord de guidage (6) de la première rainure de décharge (5) et un angle plus grand de 6°.

2. Pompe à injection selon la revendication 1, caractérisée en ce que la deuxième rainure de décharge (7) possède une sortie (8) à son extrémité la plus éloignée du piston de pompe (1), la sortie (8) de la deuxième rainure de décharge (7) est soit un chanfrein, qui s'étend du bord supérieur (14) au bord inférieur (19) et ce avec une inclinaison de 40 degrés +/- 5 degrés par rapport au bord supérieur (14) de la deuxième rainure de décharge (7), ou en ce que la sortie (8) de la deuxième rainure de décharge (7) est au moins une ligne approximativement incurvée qui s'étend du bord supérieur au bord inférieur de la deuxième rainure de décharge (7).

3. Pompe à injection selon la revendication 1 ou 2, caractérisée en ce que les bords supérieur et inférieur de la deuxième rainure de décharge (7) sont parallèles et ont un écartement représentant 5 à 7 % du diamètre de piston de pompe et que la profondeur et la largeur de la deuxième rainure de décharge (7) sont identiques.

4. Pompe à injection selon l'une des revendications 1 à 3, caractérisée en ce que le bord inférieur (19) de la deuxième rainure de décharge (7) est parallèle ou presque parallèle au bord supérieur du piston (13).

5. Pompe à injection selon l'une des revendications 1 à 4, caractérisée en ce que l'autre orifice de décharge est une fente de décharge (11), qui est rectangulaire, qui a la même largeur que la deuxième rainure de décharge (7), qui est reliée à l'orifice d'aspiration (3) perpendiculairement au sens de déplacement du piston de pompe (1) et se trouve en-dessous du point le plus haut (16) de l'orifice d'aspiration (3) à une distance égale à la largeur de la deuxième rainure de décharge (7) et en ce que les longueurs des bords supérieurs de la deuxième rainure de décharge (7) et de la fente de décharge (11) sont égales.

6. Pompe à injection selon la revendication 5, caractérisée en ce que la longueur des bords supérieurs de la rainure de décharge (7) et de la fente de décharge (11) sont suffisantes pour qu'en position angulaire du piston de pompe (1), qui correspond au "plein régime", la rainure de décharge (7) et la fente de décharge (11) ne se touchent pas et qu'en position angulaire du piston de pompe (1) correspondant au "ralenti bas", la distance du bord supérieur (13) de piston de pompe au bord supérieur (14) de la deuxième rainure de décharge (7) est suffisante pour que la deuxième rainure de décharge (7) rencontre juste la fente de décharge (11), quand le bord supérieur (13) du piston de pompe (1) obture l'orifice d'aspiration (3).

7. Pompe à injection selon l'une des revendications 1 à 4, caractérisée en ce qu'on réalise l'autre orifice de décharge sous forme de trou de décharge (11a) distinct de l'orifice de décharge (3).

8. Pompe à injection selon la revendication 7, caractérisée en ce que le trou de décharge (11a) est décalé d'un angle de 40 degrés + 2 degrés par rapport à l'orifice d'aspiration (3), le diamètre du trou de décharge (11a) représente 8 à 12 % du diamètre de pompe (1) et en ce que le bord supérieur du trou de décharge (11a) se trouve en-dessous du bord supérieur de l'orifice d'aspiration (3) à une distance correspondant au diamètre du trou de décharge (11a).

9. Pompe à injection selon l'une des revendications 7 ou 8, caractérisée en ce que la longueur du bord supérieur (14) de la rainure de décharge (7) est suffisante pour qu'en position angulaire du piston de pompe (1) correspondant au "plein régime", le sommet de la sortie (8) de la rainure de décharge (7) et le trou de décharge (11a) se recouvrent légèrement.

10. Pompe à injection selon l'une des revendications 7 à 9, caractérisée en ce qu'en position angulaire du piston de pompe (1), correspondant au "ralenti bas" la distance du bord supérieur du piston de pompe (13) au bord supérieur (14) de la deuxième rainure de décharge (7) est suffisante pour que la deuxième rainure de décharge (7) soit juste tangente au trou de décharge (11a), quand le bord supérieur du piston de pompe (13) obture l'orifice d'aspiration (3).

Fig.1

Fig.2

Fig. 3

Fig. 4

Fig. 4a

1 13 3 16 11 15 18 14 7 17

8

Fig. 5

8

Fig. 5a

Fig.6

Fig.7

14

3        11a

Fig.8

3        11a

Fig.8a

Fig.9

Fig.9 a